Europäisches Patentamt

European Patent Office

Office européen des brevets

(19)

(11) Veröffentlichungsnummer: **0 280 879**
**B1**

# EUROPÄISCHE PATENTSCHRIFT

(45) Veröffentlichungstag der Patentschrift:
25.07.90

(51) Int. Cl.⁵: **B60K 41/20, B60T 8/32**

(21) Anmeldenummer: **88101288.4**

(22) Anmeldetag: **28.04.82**

(60) Veröffentlichungsnummer der früheren Anmeldung
nach Art. 76 EPÜ: **0064669**

(54) Antriebsschlupfregelung.

(30) Priorität: 30.04.81 DE 3117104
17.02.82 DE 3205627

(43) Veröffentlichungstag der Anmeldung:
07.09.88 Patentblatt 88/36

(45) Bekanntmachung des Hinweises auf die Patenterteilung:
25.07.90 Patentblatt 90/30

(84) Benannte Vertragsstaaten:
DE FR GB

(56) Entgegenhaltungen:
FR-A- 2 100 329
US-A- 3 938 611

(73) Patentinhaber: ROBERT BOSCH GMBH, Postfach 50,
D-7000 Stuttgart 1(DE)

(72) Erfinder: Braschel, Volker, Ing. (grad.), Goethestrasse 1,
D-7100 Heilbronn(DE)
Erfinder: Jonner, Wolf-Dieter, Ing. (grad.),
Burgunderstrasse 25, D-7141 Beilstein(DE)
Erfinder: Korasiak, Wolfgang, Ing. (grad.), Bromberger
Strasse 20, D-7120 Bietigheim(DE)
Erfinder: Leiber, Heinz, Ing. (grad.),
Theodor-Heuss-Strasse 34, D-7141 Oberriexingen(DE)

(74) Vertreter: Kammer, Arno, Dipl.-Ing., ROBERT BOSCH
GmbH Zentralstelle Patente-Elektronik 1 Postfach 50,
D-7000 Stuttgart 1(DE)

ACTORUM AG

## Beschreibung

### Stand der Technik

Die Erfindung geht aus von einer Antriebsschlupfregelung nach der Gattung des Hauptanspruches.

Es ist bekannt, bei Kraftfahrzeugen Mittel vorzusehen, die das Durchdrehen der angetriebenen Räder verhindern, wenn beispielsweise beim Anfahren das vom Antriebsstrang an die Räder abgegebene Drehmoment größer ist als dies nach den gegebenen Haftbedingungen zwischen Rad und Straße zulässig ist. So ist beispielsweise in der DE-C 1 806 671 eine Vorrichtung zum Verhindern des Durchdrehens der angetriebenen Räder eines Kraftfahrzeuges beschrieben, bei der die Differenz der Drehzahlen jeweils eines angetriebenen und eines nicht angetriebenen Rades gebildet wird und aus dem so ermittelten Schlupf des angetriebenen Rades bei Überschreiten eines vorgegebenen Grenzwertes ein Steuersignal für ein Stellglied einer dem jeweiligen angetriebenen Rad zugeordneten Bremse erzeugt wird. Weiterhin sind auf die Antriebsmaschine einwirkende Mittel vorgesehen, die angesteuert werden, wenn der Schlupf an beiden angetriebenen Rädern einen vorgegebenen Betrag überschreitet.

Aus der US-A 3 938 611 ist eine Antriebsschlupfregelsystem mit den Merkmalen des Oberbegriffes des Anspruches 1 bekannt.

### Vorteile der Erfindung

Die erfindungsgemäße Antriebsschlupfregelung mit den kennzeichnenden Merkmalen des Anspruches 1 hat den Vorteil, daß die besonderen Verhältnisse berücksichtigt werden, die dann auftreten, wenn das Fahrzeug auf nasser Fahrbahn in den sogenannten Aquaplaning-Zustand gerät. Es wird dan der Augenblickswert der Drehzahl eines nicht angetriebenen Rades festgehalten, um Fehlsteuerungen zu vermeiden, die dadurch entstehen können, daß das in den Aquaplaning-Zustand geratende nicht angetriebene Rad eine falsche Fahrgeschwindigkeit vortäuscht.

In bevorzugter weiterer Ausgestaltung der Erfindung wird dabei die Beeinflussung der Stellglieder der Bremsen der angetriebenen Räder abgeschaltet, um Instabilitäten des Fahrzeuges zu vermeiden.

### Zeichnung

Eine Ausführungsbeispiele der Erfindung ist in der Zeichnung dargestellt und in der nachfolgenden Beschreibung näher erläutert.

### Beschreibung der Ausführungsbeispiele

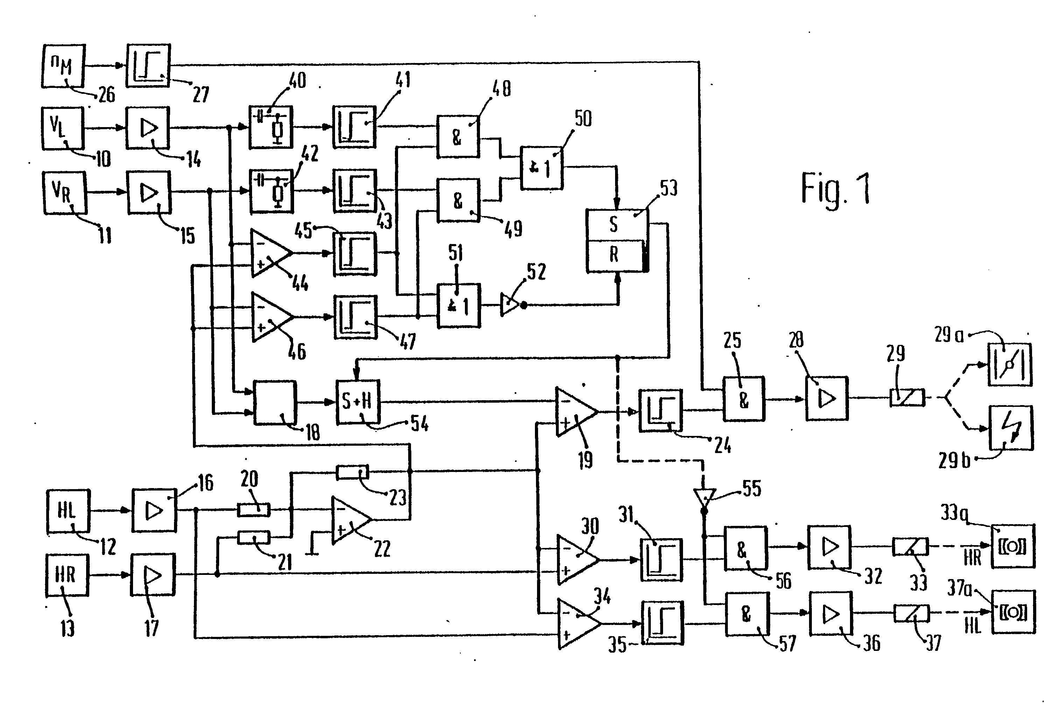

In Figur 1 sind mit 10, 11, 12, 13 Drehzahlgeber für das vordere linke Rad VL, das vordere rechte Rad VR, das hintere linke Rad HL und das hintere rechte Rad HR bezeichnet. Diese Drehzahlgeber 10, 11, 12, 13 sind and Schaltungen zur Verstärkung und Signalaufbereitung 14, 15, 16, 17 angeschlossen. Die den Vorderrädern VL und VR entsprechenden Signale werden auf eine Schaltung zur Minimalwertauswahl 18 geführt, deren Ausgang über eine Sample-and-Hold-Stufe 54 an einen Eingang eines Vergleichers 19 angeschlossen ist. Die den Hinterrädern HL und HR entsprechenden Signale liegen an Eingangswiderständen 20, 21 eines Operationsverstärkers 22, der mit einem Widerstand 23 gegengekoppelt ist. Der Ausgang den Operationsverstärkers 22 ist mit dem anderen Eingang des Vergleichers 19 verbunden. Der Ausgang des Vergleichers 19 führt über eine Schwellwertstufe 24 auf einen Eingang eines UND-Gatters 25, dessen anderer Eingang mit dem Ausgang einer Schwellwertstufe 27 beschaltet ist, die eingangsseitig von einem Motordrehzahl-Geber 26 angesteuert wird. Der Ausgang des UND-Gatter 25 führt schließlich über einen Verstärker 28 auf en Stellglied 29 zur Beeinflussung des Motordrehmoments, was durch die gestrichelte Verbindung zu einer Drosselklappe 29a bzw. einer Zündeinrichtung 29b angedeutet ist. Es versteht sich jedoch von selbst, daß die Beeinflussung durch das Stellglied 29 auch in anderer, an sich bekannter Weise ausgeführt sein kann, beispielsweise durch Beeinflussung einer Einspritzanlage und dgl.

Der Ausgang der Operationsverstärkers 22 ist weiterhin an den einen Eingang eines Vergleichers 30 angeschlossen, der über eine Schwellwertstufe 31, ein UND-Gatter 56 und einen Verstärker 32 auf ein Stellglied 33 für die Bremse 33a des rechten Hinterrades HR führt. In entsprechender Weise ist der Ausgang des Operationsverstärkers 22 an den einen Eingang eines Vergleichers 34 angeschlossen, dessen Ausgang über eine Schwellwertstufe 35, ein UND-Gatter 57 und einem Verstärker 36 an ein Stellglied 37 für die Bremse 37a des linken Hinterrades HL führt. Die weiteren Eingänge der Vergleicher 30, 34 sind mit den Ausgängen der Schaltungen 16, 17 zum Verstärker und Signalaufbereiten der Drehzahl des linken Hinterrades HL und des rechten Hinterrades HR verbunden.

Zusätzlich ist den Verstärkern 14, 15 des linken Vorderrades $V_L$ bzw. des rechten Vorderrades $V_R$ je eine Differenzierstufe 40, 42 mit nachgeschalteter Schwellwertstufe 41, 43 nachgeschaltet. Weiterhin sind den Verstärkern 14, 15 je ein Komparator 44, 46 in Reihe mit weiteren Schwellwertstufen 45, 47 nachgeschaltet, wobei die weiteren Eingänge der Komparatoren 44, 46 an den Ausgang des Verstärkers 22 angeschlossen sind, an dem ein der mittleren Hinterraddrehzahl entsprechendes Signal anliegt. Die dem linken Vorderrad $V_L$ zugeordneten Schwellwertstufen 41, 45 sind auf ein erstes UND-Gatter 48 und die den rechten Vorderrad $V_R$ zugeordneten Schwellwertstufen 43, 47 sind auf ein zweites UND-Gatter 49 geführt. Die Ausgänge der UND-Gatter 48, 49 sind and ein ODER-Gatter 50 angeschlossen und die Ausgänge der Schwellwertstufen 45, 47 sind an ein weiteres ODER-Gatter 51 mit nachgeschlatetem Inverter 52 angeschlossen. Das ODER-Gatter 50 führt auf den Satzeingang und der Inverter 52 auf den Rücksetzeingang eine Flipflops 53, dessen nicht invertierter Ausgang die Sample-and-Hold-Stufe 54 steuert, die zwischen der Minimalwertauswahl 18 und dem Vergleicher 19 angeordnet ist.

In weiterer Ausgestaltung der Erfindung führt der nicht invertierte Ausgang des Flipflops 53 noch zu einem Inverter 55, dessen Ausgang auf die Eingänge der UND-Gatter 56, 57 führt.

Die Wirkungsweise der dargestellten Anordnung ist wie folgt:

Die den Drehzahlen des linken Vorderrades VL bzw. des rechten Vorderrades VR entsprechenden Signale werden in der Schaltung zur Minimalwertauswahl 18 so verarbeitet, daß dasjenige Drehzahlsignal durchgelassen wird, das dem langsamer drehenden Rad entspricht. Dieses Signal ist die beste Annäherung an die tatsächliche Fahrgeschwindikeit des Kraftfahrzeuges. Andererseits werden die Drehzahlsignale des linken Hinterrades HL and des rechten Hinterrades HR im Operationsverstärker 22 verarbeitet, und zwar durch geeignete Dimensionierung der Widerstand 20, 21, 23 derart, daß am Ausgang des Operationsverstärkers 22 ein Signal entsteht, das dem arithmetischen Mittelwert der Hinterraddrehzahl entspricht, also einer mittleren Hinterachsdrehzahl. Diese mittlere Hinterachsdrehzahl wird im Vergleicher 19 mit der Drehzahl des am langsamsten drehenden Vorderrades, d. h. näherungsweise der Fahrgeschwindigkeit verglichen. Überschreitet das Differenzsignal am Ausgang des Vergleichers 19 in der Schwellwertstufe 24 vorgegebenen Schwelle (1. Differenz-Grenzwert), wird der eine Eingang des UND-Gatters 25 angesteuert, dessen anderer Eingang dan angesteuert ist, wenn die Motordrehzahl $n_M$ oberhalb einer vorbestimmten Schwelle, die durch die Schwellwertstufe 27 festgelegt ist, liegt. Dies ist vorzugsweise dann der Fall, wenn die Motordrehzahl oberhalb der Leerlaufdrehzahl liegt. Da dies im Fahrbetrieb des Kraftfahrzeuges im allgemeinen der Fall sein wird, wird das UND-Gatter 25 am oberen Eingang freigegeben und das Ausgangssignal der Schwellwertstufe 24 gelangt über den Verstärker 28 auf das Stellglied 29 und beeinflußt die Antriebsmaschine über die Kraftstoffzufuhr oder die Zündung oder dergleichen in ihrem Drehmoment solange, bis das Ausgangssignal des Vergleichers 19 unter den in der Schwellwertstufte 24 vorgegebenen Wert fällt.

Wenn demnach der Fahrer eines Kraftfahrzeuges mit zu großen Motordrehmoment anfährt und die angetriebenen Hinterräder insbesondere auf schlüpfiger Straße durchdrehen, wird das Stellglied 29 sofort angesteuert und das Motordrehmoment solange verkleinert, bis die angetriebenen Hinterräder noch um einen gewissen Betrag schneller drehen als das langsamste nicht angetriebenen Vorderrad. Diese Differenz ist – wie bereits erwähnt – durch die Schwellwertstufe 24 und entspricht dem optimalen Schlupf beim Anfahren.

Zusätzlich ist der Ausgang Operationsverstärkers 22 an die Vergleicher 30, 34 angeschlossen, in denen die mittlere Hinterachsdrehzahl mit den Drehzahlen der einzelnen Räder verglichen wird. Die Drehzahlen der Hinterräder HL, HR können sich wegen des Hinterachsdifferentials unter Umständen erheblich unterscheiden, beispielsweise dann, wenn sich das eine Rad auf einer trockenem Untergrund befindet und das andere Rad auf einer Eisplatte. In diesem Fall wird das auf der Eisplatte befindliche Rad durchdrehen und das auf trockenem Untergrund stehende Rad stehen bleiben, so daß das Fahrzeug nicht anfahren kann. Bei der in der Figur dargestellten Schaltungsanordnung wird dieses Abweichen von der mittleren Hinterachsdrehzahl erkannt und führt dazu, daß die Bremse des schneller drehenden Rades, im genannten Beispiel also des Rades auf der Eisplatte, angezogen wird. Da das auf trokkenem Untergrund stehende Rad nicht abgebremst wird, ist mit einer erfindungsgemäßen Vorrichtung ein Anfahren auch einer derartigen Situation möglich.

Wie demnach ersichtlich, wird mit der beschriebenen Antriebsschlupfregelung gleichzeitig auf das Motordrehmoment und die einzelnen angetriebenen Räder eingewirkt, so daß einmal das Aufbringen des Motordrehmomentes auf die Fahrbahn optimiert und zum anderen die Kraftverteilung an den angetriebenen Rädern ausgeglichen wird.

Bei dem in der Zeichnung dargestellten Ausführungsbeispiel der erfindungsgemäßen Antriebsschlupfregelung ist den besonderen Verhältnissen Rechnung getragen, die dann auftreten, wenn das Fahrzeug auf nasser Fahrbahn in den sogenannten Aquaplaning-Zustand gerät.

Bei auftretendem Aquaplaning werden die Vorderräder VL, VR durch die Wasserschicht auf der Fahrbahn gebremst, so daß ein Schlupf und gleichzeitig eine Verzögerung der Vorderräder VL, VR entsteht. Die Verzögerung der Vorderräder VL, VR wird über die Differenzierstufen 40, 42 erkannt, wobei in den Schwellwertstufen 41, 43 festgelegt wird, ob ein vorgegebener Grenzwert überschritten wird oder nicht. Der Schlupf der Vorderräder VL, VR wird in den Komparatoren 44, 46 erkannt, denen zum Vergleich die mittlere Hinterachsdrehzahl vom Verstärker 22 zugeführt wird. Die Schwellwertstufen 45, 47 legen dabei fest, ob kritische Schlupfwerte (2. Differenz-Grenzwert) des linken bzw. rechten Vorderrades überschritten werden. Durch die Anordnung der logischen Elemente 28 bis 52 wird nun bewirkt, daß das Flipflop 53 dann gesetzt wird, wenn entweder am linken oder rechten Vorderrad jeweils gleichzeitig der kritische Verzögerungs- und der kritische Schlupfwert überschritten wird. Das Flipflop 53 wird demgegenüber erst dann wieder zurückgesetzt, wenn an keinem der beiden Vorderräder mehr der kritische Schlupfwert überschritten ist. Ein Setzen des Flipflops 53 hat eine Ansteuerung der Sample-and-Hold-Stufe 54 zur Folge, wodurch der Augenblickswert der jeweils von der Minimalwertauswahl 18 festgelegten Raddrehzahl festgehalten wird, wobei selbstverständlich durch geeignete Verzögerungsmittel garantiert ist, daß jeweils derjenige Wert der Raddrehzahl festgehalten wird, der bei Eintreten des Aquaplaning-Zustandes vorlag. Die Sample-and-Hold-Stufe 54 bewirkt damit eine Extrapolation der angenommenen Fahrgeschwindigkeit, so daß keine Fehlreaktion dadurch auftreten kann, daß die in den Aquaplaning-Zustand geratenen Vorderräder eine falsche Fahrgeschwindigkeit vortäuschen. Es versteht sich dabei weiter, daß die Sample-and-Hold-Stufe 54 durch verschiedene, an sich bekannte Schaltungen dargestellt werden kann, im einfachsten Fall durch einen entladbaren Kondensator.

Da bei auftretendem Aquaplaning-Zustand die Beeinflussung der Bremsen der angetriebenen Räder durch die Stellglieder 33, 37 zu Instabilitäten führen kann, ist in der weiteren Ausgestaltung der Erfindung vorgesehen, die Ansteuerung der Stellglieder 33, 37 über die UND-Gatter 56, 57 zu sperren, die an ihren einen Eingängen bei Setzen des Flipflops 53 über den Inverter 55 mit einem O-Signal beaufschlagt werden, so daß die Ausgangssignale der Schwellwertstufen 31, 35 nicht weitergeleitet werden.

## Patentansprüche

1. Antriebsschlupfregelung bei einem Kraftfahrzeug mit Schaltmitteln zum Erfassen der Drehzahlen angetriebener und nicht angetriebener Räder und mit einem Stellglied (29) zum Beeinflussen des Motordrehmomentes, wobei der arithmetische Mittelwert der Drehzahlen der angetriebenen Räder (HL, HR) gebildet (Verstärker 22), mit der Drehzahl eines nicht angetriebenen Rades ($V_L$, $V_R$) in einem Vergleicher (19) verglichen und bei Überschreiten eines ersten Differenz-Grenzwertes (Schwellwertstufe 24) das Stellglied (29) zur Beeinflussung des Motordrehmomentes angesteuert wird, dadurch gekennzeichnet, daß weiter die Drehzahl der nicht angetriebenen Räder ($V_L$, $V_R$) mit dem arithmetischen Mittelwert der angetriebenen Räder verglichen (Vergleicher 44, 46) und bei Überschreiten eines zweiten Differenz-Grenzwertes (Schwellwertstufen 45, 47) der am Eingang des Vergleichers (19) anliegende Augenblickswert der Drehzahl des nicht angetriebenen Rades bis zum Wieder-Unterschreiten des Differenz-Grenzwertes festgehalten wird (Sample-and-Hold-Stufe 54).

2. Antriebsschlupfregelung nach Anspruch 1, dadurch gekennzeichnet, daß der Augenblickswert nur dan festgehalten wird, wenn zusätzlich die Verzögerung (Differenzierer 40, 42) des nicht angetriebenen Rades einen vorgegebenen Schwellwert (Schwellwertstufen 41, 43) überschreitet.

3. Antriebsschlupfregelung nach Anspruch 1 oder 2, dadurch gekennzeichnet, daß dem Eingang des Vergleichers (19) die Drehzahl des jeweils langsamer drehenden nicht angetriebenen Rades ($V_L$, $V_R$) zugeführt wird (Minimalwertstufe 18).

4. Antriebsschlupfregelung nach einem der Ansprüche 1 bis 3, dadurch gekennzeichnet, daß als Drehzahl eines nicht angetriebenen Rades ($V_L$, $V_R$) der arithmetische Mittelwert der Drehzahlen der nicht angetriebenen Räder ausgewertet wird.

5. Antriebsschlupfregelung nach einem der Ansprüche 1 bis 3, dadurch gekennzeichnet, daß das Stellglied (29) zum Beeinflussen des Motordrehmomentes nur angesteuert wird, wenn die Motordrehzahl ($n_M$) über einer vorbestimmten Drehzahl (Schwellwertstufe 27), vorzugsweise der Leerlaufdrehzahl liegt.

## Claims

1. Drive slip control in a motor vehicle having switching means for detecting the speeds of rotation of driven and of non-driven wheels and having an actuator (29) for affecting the engine torque, the arithmetic mean value of the speeds of rotation of the driven wheels (HL, HR) being formed (amplifier 22), being compared in a comparator (19) to the speed of rotation of a non-driven wheel ($V_L$, $V_R$) and in the event of a first differential threshold value (threshold value stage 24) being exceeded the actuator (29) for affecting the engine torque being actuated, characterized in that, furthermore, the speed of rotation of the non-driven wheels ($V_L$, $V_R$) is compared to the arithmetic mean value of the driven wheels (comparators 44, 46) and in the event of a second differential threshold value (threshold value stages 45, 47) being exceeded the momentary value, present at the input of the comparator (19), of the speed of rotation of the non-driven wheel is retained until the differential threshold value is undershot again (sample-and-hold stage 54).

2. Drive slip control according to claim 1, characterized in that the momentary value is only retained if in addition the deceleration (differentiators 40, 42) of the non-driven wheel exceeds a predetermined threshold value (threshold value stages 41, 43).

3. Drive slip control according to claim 1 or 2, characterized in that the speed of rotation of the non-driven wheel (VL, VR) in each case rotating more slowly is fed to the input of the comparator (19) (minimum value stage 18).

4. Drive slip control according to one of claims 1 to 3, characterized in that the arithmetic mean value of the speeds of rotation of the non-driven wheels is evaluated as the speed of rotation of a non-driven wheel (VL, VR).

5. Drive slip control according to one of claims 1 to 3, characterized in that the actuator (29) for affecting the engine torque is only actuated if the engine speed ($n_M$) is above a predetermined speed of rotation (threshold value stage 27), preferably the idling speed.

## Revendications

1. Régulation du patinage d'entraînement pour un véhicule automobile comportant des moyens de circuit pour mesurer les vitesses de rotation des roues entraînées et non entraînées et comportant un organe de réglage (29) pour corriger le couple de rotation du moteur, la valeur moyenne arithmétique des vitesses de rotation des roues entraînées (HL, HR) étant formée (amplificateur 22), comparée dans un comparateur (19) à la vitesse de rotation d'une roue non entraînée (VL, VR) et, en cas de dépassement d'une première valeur limite de différence (étage de valeur de seuil 24), l'organe de réglage (29) étant commandé en vue de corriger le couple de rotation du moteur, caractérisée en ce qu'en outre, la vitesse de rotation des roues non entraînées (VL, VR) est comparée (comparateurs 44, 46) à la valeur moyenne arithmétique des roues entraînées et, en cas de dépassement d'une deuxième valeur limite de différence (étages de valeurs de seuil 45, 47), la valeur instantanée, appliquée à l'entrée du comparateur (19), de la vitesse de rotation de la roue non entraînée est maintenue fixe (étage d'échantillonnage et de maintien 54), jusqu'au nouveau franchissement, par diminution, de la valeur limite de différence.

2. Régulation du patinage d'entraînement selon la revendication 1, caractérisée en ce que la valeur instantanée n'est maintenue fixe que lorsqu'en plus le retardement (différenciateurs 40, 42) de la roue non entraînée dépasse une valeur de seuil prédéterminée (étages de valeur de seuil 41, 43).

3. Régulation du patinage d'entraînement selon la revendication 1 ou 2, caractérisée en ce que la vitesse de rotation de celle des roues non entraînées (VL, VR) qui tourne chaque fois le plus lentement est envoyée (étage de valeur minimale 18) à l'entrée du comparateur (19).

4. Régulation du patinage d'entraînement selon l'une des revendications 1 à 3, caractérisée en ce que la valeur moyenne arithmétique des vitesses de rotation des roues non entraînées est exploitée à titre de vitesse de rotation d'une roue non entraînée (VL, VR).

5. Régulation du patinage d'entraînement selon l'une des revendications 1 à 3, caractérisée en ce que l'organe de réglage (29) est seulement commandé pour corriger le couple de rotation du moteur lorsque la vitesse de rotation du moteur (nM) est supérieure à une vitesse de rotation prédéterminée (étage de valeur de seuil 27), de préférence la vitesse de ralenti.

Fig. 1

EP 0 280 879 B1